# EUROPEAN PATENT APPLICATION

(11) **EP 1 457 311 A1**
(43) Date of publication of application: **15.09.2004**
(21) Application number: 02738762.0
(22) Date of filing: 19.06.2002
(51) Int. Cl.: B32B 5/02, A47H 23/08, E06B 9/13

(54) **SHEET AND CURTAIN USING THE SAME**

(30) Priority: 21.12.2001 JP 2001389045; 15.01.2002 JP 2002005833
(71) Applicant: TORAY INDUSTRIES, INC., Tokyo 103-8666 (JP)
(72) Inventor: TAKEDA, Masanobu, Kusatsu-shi, Shiga 525-0037 (JP); SEKI, Masao, Kusatsu-shi, Shiga 525-0056 (JP); TATSUMI, Kaoru, Otsu-shi, Shiga 520-0842 (JP)
(74) Representative: Coleiro, Raymond
(86) International application number: PCT/JP2002/006099
(87) International publication number: WO 2003/053670

(57) **Abstract**

A sheet, characterized in that it comprises a film comprising a thermoplastic resin and, laminated on at least one surface of the film, a fiber fabric containing a flame-proof compound, and the fiber fabric comprises the same kind of a thermoplastic resin as that of the film; and a curtain using the sheet. The sheet is a functional sheet which is excellent in flame-proof property, and also excellent in light controlling property and anti-static property.

## Description

### Technical Field of the Invention

The present invention relates to a sheet excellent in flame-proof property, light controlling property and anti-static property, and a curtain using the same.

### Background Art of the Invention

Although spatial partition membranes, agricultural sheets, partitions, curtains, roll blinds, etc. are exemplified as functional sheets, as properties provided thereto, for example, flame-proof property and light interrupting property are provided for spatial partition membranes, dew condensation preventing property and ultraviolet ray screening property are provided for agricultural sheets, flame-proof property and light interrupting property are provided for partitions, and flame-proof property and light interrupting property are provided for light interrupting curtains and roll blinds. However, sheets having high light controlling properties of high visual ray transmitting property, ultraviolet ray screening property and infrared screening property have not been proposed.

Especially, with respect to curtains and roll blinds, a property for screening ultraviolet rays and infrared rays transmitted through a glass is required from the viewpoints of saving energy and protecting inside particularly in shops, and in a case where a conventional thick cloth is used, although the above-described purpose can be achieved, visual rays are also screened, and as a result, there is a problem that a visibility from inside and outside vanishes.

On the other hand, although a laminate of "an infrared ray screening cloth formed by laminating a transparent film coated with an infrared ray screening layer on a base cloth" is proposed (JP-A-5-272279), it does not consider a fire-resistant property and it is not suitable for shops and the like, and a functional sheet excellent in flame-proof property and excellent in light controlling property, anti-static property and mechanical property has not been proposed.

### Disclosure of the Invention

In the present invention, paying attention to such conventional defects, an earnest investigation has been carried out with respect to a sheet excellent in flame-proof property and anti-static property and also having a light controlling property of light transmitting property, ultraviolet screening property and infrared screening property, and as a result, it has been found that the subject matter can be accomplished by laminating a fiber fabric containing a flame-proof compound on at least one surface of a film comprising a thermoplastic resin.

### The Best mode for carrying out the Invention

The present invention has the following constitution. A sheet according to the present invention is characterized in that the sheet comprises a film comprising a thermoplastic resin and a fiber fabric containing a flame-proof compound which is laminated on at least one surface of the film, and the fiber fabric comprises the same kind of a thermoplastic resin as that of the film.

The sheet according to the present invention is a laminate of a film and a fiber fabric, and in order to provide a flame-proof property to such a laminate, because in a case of a combination of respective different raw materials a laminate is liable to burn by a difference of burning behaviour such as melt-starting temperature, decomposition temperature and firing point, it is important that the thermoplastic resins used for the constitution are unified to a same kind of thermoplastic resin. Further, even in a case where a flame-proof compound is added to a fiber fabric described later in such a constitution, it has been found that the effect due to the addition of the flame-proof compound is very great because a difference in burning behaviour does not occur. Where, "same kind" means that thermoplastic resins as main components other than additives are same.

In the present invention, as the thermoplastic resin forming a fiber fabric, for example, a polyamide resin such as a nylon 6 and a nylon 66, a polyester resin such as a polyethylene terephthalate and a polybutylene terephthalate, a polyolefine resin such as a polyethylene and a polypropylene, a polyacrylic resin and a polyurethane resin can be used. Among these resins, a nylon 6 and a polyethylene terephthalate are preferred, and further, a polyethylene terephthalate can be preferably employed from the viewpoints of visual ray transmitting property and mechanical properties of fibers.

The film used in the present invention has a function of ultraviolet ray screening and/or infrared ray screening. As a method for providing the function to the film, a functional compound may be blended in the film, or a layer of the functional compound may be formed on a film surface by coating, depositing or sputtering. Further, these methods may be combined.

In order to control a visual ray transmission of the sheet according to the present invention as high as possible, it is important that the visual ray transmitting property of the film is not injured when the above-described function is provided.

As a compound for providing an ultraviolet ray screening property in the present invention, an organic or inorganic ultraviolet ray absorbent or ultraviolet ray reflecting agent is used. For an organic compound, as a triazole-group compound, for example, 2-(2'-hydroxy-3',5'-di-t-butylphenyl)-5-chlorobenzotriazole, 2-(5-methyl-2-hydroxyphenul)benzotriazole, 2-(2'-hydroxy-3'-t-amino-5'-isobutylphenyl)-5-chlorobenzotriazole, 2-(3,5-di-t-butyl-2-hydroxyphenul)benzotriazole, 2-(2'-hydroxy-5'-1,1,3,3-tetramethylbutylphenyl)benzotriazole, etc. can be used, and as a benzophenon-group compound, 2-hydroxy-4-n-octoxybenzophenon, 2-hydroxy-4-methoxy-2'-carboxybenzophenon, 2,2'-dihydroxy-4,4'dimethoxybenzophenon, 2-hydroxy-4-benzoyloxybenzophenon, 2,2',4,4'-tetrahydroxybenzophenon, etc. can be used. Further, as a hydroxyquinone-group compound, hydroquinone and hydroxynonedisalicylate can be used, and as an acrylate-group compound, 2-ethylhexyl-2-cyano-3, 3'-diphenylacrylate, ethyl-2-cyano-3,3'-diphenylacrylate, etc. can be used. As a salicylic acid-group compound, phenylsalicylate, paraoctylphenylsalicylate, etc. can be used. These ultraviolet ray absorbents, solely or as a mixture, are added into a film resin at a content of 0.1 part by weight or more, preferably in a range of 0.3 to 2 parts by weight, relative to 100 parts of a film, or coated on a fil surface at a condition being mixed in a binder resin. As the binder resin, although an urethane-group resin, a polyester-group resin, an acrylic-group resin, etc. can be used, a polyester-group resin can be preferably used from the viewpoint hard to damage a flame-proof property. As an inorganic compound, fine particles of titanium oxide, zinc oxide or silicon oxide may be handled similarly to that for an ultraviolet ray absorbent so as to be added in a range of 0.1 to 5 parts by weight, preferably 1 to 3 parts by weight, relative to 100 parts by weight of a film. The organic compound and the inorganic compound can also be used together.

For an ultraviolet ray screening compound, as an organic compound, a cyanine-group compound, a squalillium compound, a thiolnickel complex salt-group compound, a phthalocyanine-group compound, a triarylmethane-group compound, a naththoquinone-group compound, an anthraquinone-group compound, an amino compound etc. can be used. As an inorganic compound, a zinc oxide, a tin oxide, a tin oxide doped with an antimony oxide or an indium oxide, an oxide, carbonate or borate of a metal belonging to periodic table 4A, 5A or 6A, etc. can be raised. One of these organic or inorganic compounds or a mixture of two or more thereof is used so as to be kneaded in a film or so as to be coated on a film surface as a mixture with a binder resin, at a content in a range of 0.1 to 10 parts by weight, preferably 0.3 to 4 parts by weight, relative to 100 parts by weight of a film. As the binder resin, although an urethane-group resin, a polyester-group resin, an acrylic-group resin, etc. can be used, a polyester-group resin can be preferably used from the viewpoint hard to damage a flame-proof property. Further, a thin layer may be formed on a film surface by physical deposition, chemical deposition or sputtering of the above-described inorganic compound, for example, a tin oxide doped with an indium oxide.

Further, a colorant, a flame-proof agent, an anti-static agent, a conductive agent, a mildew-proof agent, an optical stabilizer, a thermal stabilizer, a soil resistant agent, an antibacterial agent, a deodorant, a plasticizer, an inorganic additive, a dew condensation-proof agent, etc. may be contained in a film, in a range which does not damage the advantages according to the present invention.

In the film according to the present invention, a target optical property is obtained by controlling the kind and amount of the above-described ultraviolet ray absorbent and infrared ray screening agent. A stable property is liable to be obtained by kneading the ultraviolet ray absorbent in a film and coating the infrared ray screening agent on the film.

As the optical property of the film according to the present invention, it is preferred that an ultraviolet ray screening rate in a region of a wave length less than 0.4µm is in a range of 30% or more, a visual ray transmission in a region of a wave length of 0.4µm or more and 0.8µm or less is in a range of 70% or more, and an infrared ray screening rate in a region of a wave length of 0.8µm or more and 1.2µm or less is in a range of 20% or more.

The film according to the present invention may be mat finished for the purpose of preventing a reflection of a visual ray. The mat finish is not particularly restricted, a known method can be employed therefor, and for example, a sand blast method, a method for kneading fine particles of an inorganic substance such as a silicon oxide or an organic substance such as a polyethylene or an acrylic into a film, and a method for dispersing the particles in a binder resin and applying it onto a film surface, can be exemplified. A haze due to the mat finish in the present invention is preferably 5% or more, more preferably 10% or more. A thickness of a film used in the present invention is decided depending on the kind of the resin, the ray transmission, the strength, and the purpose for the use such as an formation or a flexibility, and the thick ness is preferably in a range of 5 to 500µm, more preferably in a range of 10 to 100µm, and used is a film with a thickness suitable to have a performance for screening ultraviolet rays and infrared rays at respective specified rates and transmitting visual rays as much as possible.

For the fibers forming the fiber fabric according to the present invention, the same kind of a thermoplastic resin as that of the film forming the sheet according to the present invention is used. Such fibers may be either long fibers or short fibers. As to the total thickness of a yarn forming such a fiber fabric, in a case of a roll curtain, etc,, a yarn with a small thickness is preferred in order to achieve a compact containing in a containing into a roll cassette portion or in a containing in a pleat system, and concretely, a yarn having a thickness within 11 to 330 decitex is preferably used. Further, even in a case of a yarn having a greater thickness, if a fiber fabric has a mesh structure, it can be used without sacrificing a transmission property of visual rays. As a fiber fabric according to the present invention, a woven fabric, a knitted fabric, a nonwoven fabric, etc. can be used, and in order to increase the optical property, in particular, a visual ray transmission, a fiber fabric having a high opening rate or a thin fiber fabric, for example, a mesh woven fabric, a lace knitted fabric, a plain gauze fabric, etc. are preferably used. An weight of such a fiber fabric is preferably in a range of 20 to 200 g/m² in order not to damage a tear strength and in order to obtain a visual ray transmission property through a roll curtain. A tear strength can be increased and a design property can be improved by laminating the fiber fabric according to the present invention on a film. In a use requiring repeated opening/closing operation, such a tear strength is 10 N or more, preferably 15 N or more, in order to prevent a breakage of a sheet and achieve a good durability.

The fiber fabric according to the present invention contains a flame-proof compound. As the containing method, preferred is at least one of a method for copolymerizing the flame-proof compound in fiber molecules, a method for kneading it in fibers, a method for exhausting it into fibers, and a method for adhering it to fiber surfaces. In a case of a polyester-group fiber, as an example of copolymerization, an embodiment is preferred wherein at least 85 mol% of repeated units is a polyester such as a polyethylene terephthalate, a polybutylene terephthalate, a polyethylene-2,6-naphthalate, a polypropylene terephthalate, etc., and a bifunctional phosphorus compound exists in the repeated units preferably at a content in a range of 0.2 to 1.5 wt% as phosphorus element conversion. As such a bifunctional phosphorus compound, a phosphonate such as phenyl phosphoric acid dimethyl or phenyl phosphoric acid diphenyl, a phosphinate such as (2-carbooxyrthyl)methyl phosphinic acid or (2-mthoxycarbonylethyl)methyl phosphinic acid methyl, and a phosphinic oxide such as (1,2-dicarbooxyethyl)methyl phosphinic oxide or (2,3-dicarbooxypropyl)dimethyl phosphinic oxide can be exemplified. As the exhaustion of a flame-proof compound due to a post processing applied to fibers, for example, a method for using an aqueous solution of hexabromocyclododecane or cyclic phosphoric ester, adding it to a dyeing bath, treating it at 130 to 140°C for 40 to 60 minutes and exhausting it together with a dye, or a method for dipping the fiber in the aqueous solution before or after dyeing, squeezing the fiber by a mangle, drying it, and heat treating it at 180 to 200°C for 0.5 to 5 minutes, can be employed. As the method for adhering a flame-proof compound to fiber surfaces, a preferable method can be exemplified wherein at least one of a bromine-group compound, a chlorine-group compound, a phosphorus-group compound, a phosphorus-bromine-group compound, a nitrogen-group compound, a melamine-group compound, a sulfur-group compound, an inorganic salt compound, etc., which are generally used for processing of fibers, is provided to a fiber fabric by dipping method or coating method, as needed, using a binder resin, and thereafter, drying and heat treatment are carried out. The method for the flame-proof treatment to be employed, the kind of the flame-proof compound to be used, and the amount of the flame-proof compound to be applied, can be decided the formation of the used sheet and the purpose of the use thereof.

The fiber fabric according to the present invention preferably contains an anti-static compound. By containing an anti-static compound in the fiber fabric, an anti-static property can be provided to a roll curtain, a static electricity generated by friction or peeling particularly at the time of opening/closing operation of the roll curtain can be prevented, a soil due to adhesion of dust and the like can be prevented, and an inconvenience can be prevented wherein the curtain is pulled toward or repelled against a window or a wall by the static electricity. As the anti-static property, it is preferred that a frictional elctrification voltage of a sheet determined based on a method defined as JIS L-1094 method B in an atmosphere of 25°C and 40 %RH is 2.0 kV or less, more preferably 1.0 kV or less. As the anti-static compound, nonion-group, cation-group, anion-group and amphoteric-group anti-static agents, which are generally used in fiber processing, can be used, and the above-described advantage can be obtained by adhesion thereof onto fiber surfaces of the fiber fabric.

Further, an ultraviolet ray absorbent can be contained in a fiber fabric according to the present invention, and as a containing method, a known method can be employed such as a method for kneading the ultraviolet ray absorbent into fibers or a method for exhausting it into fibers at a post processing. The ultraviolet ray absorbent is not particularly limited, benzotriazole-group, benzophenon-group, salicylic acid derivative-group and triazine-group absorbents can be exemplified, and among these absorbents, a triazine-group absorbent is particularly preferred, in which three phenyl groups are substituted in a triazine ring and which has a low thermal sublimation property, such as 2-(2'-hydroxy-4'-methoxyphenyl)-4,6-diphenyl-s-triazine or 2-(2'-hydroxy-4'-ethoxyphenyl)-4,6-diphenyl-s-triazine.

Further, at least one function of water repellent, antibacterial, anti-mold and deodorization functions can be provided to a fiber fabric according to the present invention other than the above-described functions, within a range that does not damage the effect according to the present invention.

In the present invention, the above-described film and fiber fabric are laminated via an adhesive. As the adhesive, a known adhesive, such as a polyester-group resin, a polyurethane-group resin or an acrylic-group resin, can be used, and among these, a polyurethane-group resin adhesive is preferably used from the viewpoint of bonding strength and durability.

As the polyurethane-group resin adhesive used in the present invention, a polyurethane resin such as a two-liquid curing type or a single-liquid curing type is used, and among these, a two-liquid curing type polyurethane-group resin adhesive is preferably used from the viewpoint of bonding strength, etc. Such a two-liquid curing type polyurethane resin can be obtained by preparing a polyol as a main agent and reacting an isocyanate therewith as a crosslinking agent (a curing agent). Such a polyol has two or more hydroxyl groups in a molecule, and for example, polyethylene glycol, polypropylene glycol, acrylic polyol, polyester polyol, polyether polyol, polycarbonate polyol, etc. can be used. Further, as the isocyanate, a polyfunctional isocyanate having two or more isocyanate groups in a molecule is used, and for example, an aromatic isocyanate such as 2,4-tolylene diisocyanate, xylilene diisocyanate or 4,4'-diphenylmethane diisocyanate, or an aliphatic (or cycle-aliphatic) isocyanate such as hexamethylene diisocyanate, isophorone. diisocyanate or hydrogenated diphenylmethane diisocyanate, can be preferably used.

As such a polyurethane resin, a polyether-group polyurethane resin, a polyester-group polyurethane resin, a polycarbonate-group polyurethane resin, etc. are preferably used, and among these, a polyester-group polyurethane resin is used particularly preferably from the viewpoint of bonding property. These polyurethane resin-group adhesives are preferably used in any system of a solvent system and aqueous system.

Among such polyurethane resin-group adhesives, in the present invention, a polyurethane resin-group adhesive, an 100% modulus of which determined based on JIS K-6301 is in a range of 10 to 200 kg/cm², is preferably used. If the 100% modulus is less than 10 kg/cm², because the stress relaxation due to the adhesive lacks, a peel strength between the fiber fabric and the film decreases. If the 100% modulus is more than 200 kg/cm², the feeling as a sheet becomes hard. Such a polyurethane resin-group adhesive is applied in a range of 5 to 50 g/m². If the application amount is less than 5 g/m², it is difficult to obtain a necessary peel strength because the fiber fabric is a mesh structure more or less. If the application amount is more than 50 g/m², there is a tendency to damage a visual ray transmission property through a roll curtain, and there is a fear that the flame-proof property is affected. Where, as the adhesive, it is preferred to use a non-colored transparent adhesive in order to increase the visual ray transmission property of the curtain.

As the method for bonding the film and the fiber fabric, if an adhesive is applied to the film side, because the visual ray transmission property through the curtain is damaged by the adhesive, preferably employed is a method for applying or distributing dottedly an adhesive onto the fiber fabric and laminating both. Further, as the application method onto the fiber fabric, a method using an applicator, a dispenser, a roll coater, a gravure coater, a knife coater, etc. can be employed, and among these, a method for applying an adhesive on a fiber fabric by a gravure coater is preferably employed, because generation of an excessive adhesive on a mesh portion of the fiber fabric can be prevented, the adhesive can be applied uniformly and the bonding strength can be increased.

The bonding strength between the film and the fiber fabric is preferably 2 N/3cm or more, more preferably 3 N/3cm or more, from the viewpoint of prevention of peeling due to repeated opening/closing and folding, wind and rain, etc.

To the adhesive, a function for screening ultraviolet rays may be provided similarly to that for the film, within a range which does not damage the effect according to the present invention. By adding an ultraviolet ray absorbent to the film to be formed and the adhesive, an excellent ultraviolet ray screening property can be obtained by a synergistic effect with an ultraviolet ray absorbent contained in the fibers of the fiber fabric.

As the structure for bonding the film and the fiber fabric, the fiber fabric may be bonded not only to one surface of the film but also to both surfaces. By such a structure, an irregular reflection at a film surface can be suppressed.

The thickness of the sheet according to the present invention is not particularly limited, and it is preferred to set it at 1.0 mm or less for such a use requiring a compact formation as in a roll curtain.

Further, a tear strength of such a sheet is preferably 10 N or more as a strength determined based on a method defined as JIS L-1096 6.15, 1. Namely, if the tear strength is less than 10 N, a film breakage and the like occurs by repeated opening/claosing operation in a use of a roll curtain, etc., and the durability deteriorates.

As the fiber fabric used in the present invention, it is preferred to use a dyed fiber fabric in order to exhibit a design property and an advertisement effect. The dyeing method is not limited, and any known method such as yarn dyeing, piece dyeing and textile printing can be employed. Further, as the color for dyeing, a color from a hypochromic color including a white color to a hyperchromic color including a black color may be used.

With respect to the composition of the sheet according to the present invention, in order to increase the recycle property after using it as a product, 70 wt% thereof or more, preferably 80 wt% or more, more preferably 90 wt% or more, comprises an organic polymer of an identical composition.

Especially, nylon 6 and polyethylene terephthalate are particularly preferably used from the viewpoint of recycle property. Such a nylon 6 can be easily decomposed to a raw material (a monomer), and it is only one polymer of mass production type which can be refined at a high purity. When nylon 6 is heated under a condition present with a depolymerization catalyst, it is decomposed toε-caprolactam which is a raw material before polymerization. Further, because the boiling point of this ε-caprolactam under a condition of pressure reduction (about 10 mmHg) is about 140°C, it can be easily separated and refined by distillation. Therefore, the ε-caprolactam obtained by the decomposition can be refined to a purity at the same degree as that of a new product by a precise distillation or a crystallization refining method, and it becomes possible to re-use it as a raw material of polymerization. Such a recycled ε-caprolactam is refined and polymerized to be regenerated as nylon 6, and served to a melt spinning or a molding. Other nylon may be contained in this nylon 6 polymer in a range which does not influence at the decomposition process.

On the other hand, although it is possible to separate polyethylene terephthalate into ethylene glycol and terephthalic acid which are components thereof, at a depolymerization, it is difficult at the present to separate it into such two components at a high purity, and it is efficient to re-use it to fibers or films by re-melting as in the recycle of PET bottles.

The sheet according to the present invention has a flame-proof property, and the flame-proof property is either flame-proof rank 2 or more at a determination by a method defined in JIS A-1322, a pretreatment method A, or a flame-proof property satisfying a standard defined in a method of JIS L-1091 wherein left flame, residue, length of carbonization and area of carbonizationare determined at a condition with no washing by A-1 method, section 3, number of flame contact is determined by D method, section 2, and both determined results are acceptable. Such a sheet can be appropriately used for a curtain, a spatial partition membrane, a hood, a cover for storing luggage, an eaves-projecting type tent, a bag, a water-proof cloth, a tent, an agricultural house, a heat/cold reserving cover or a partition, and is preferable particularly for use capable of seeing an opposite 'surface by transmission and preventing a damage due to ultraviolet rays, infrared rays or static electricity,

Next, an example of a method for producing a roll curtain according to the present invention will be shown.

First, a film was prepared by applying a solvent type paint, in which a blend weight ratio of an indium oxide doped with tin oxide to a solvent-soluble type polyester resin was 1:1 and a solid component of which was 40%, to a uniaxially stretched polyester film with a thickness of 50µm kneaded with an ultraviolet ray absorbent at a content of 1.5 wt%, as an infrared ray screening layer, by a microgravure coater.

Further, a fiber fabric containing a flame-proof compound was prepared by dyeing a lace knit fabric, used with a polyester yarn of 165 decitex and having a wale of 36 yarns/2.54 cm, a course of 32 yarns/2.54 cm and an weight of 115 g/m², at a bath ratio of 1/20 and at a temperature of 135°C for 60 minutes, and at that time, adding hexabromocyclododecane 50% aqueous solution (modified SDF-FR, produced by Daikyo Chemical Corporation) to the dyeing solution so that the concentration became 35%.

Next, an adhesive, having a composition of 100 wt% of a polyester-group polyurethane resin solution with an 100% modulus of 25 kg/cm² ("Tieforce" 865HV, produced by Dainippon Ink and Chemicals, Inc.), 20 wt% of a bifunctional isocyanate solution ("Barknock" DN950, produced by Dainippon Ink and Chemicals, Inc.) and 6 wt% of a catalyst (Crysbon" accel T, produced by Dainippon Ink and Chemicals, Inc.), was applied onto a surface of the above-described fiber fabric by a gravure coater so that an amount after drying became 10 g/m², and after the adhesive was dried until it had a adhesive property, the fiber fabric was laminated to the above-describe infrared ray screening film, the laminate obtained by pressing by a hot roller with a temperature of 80°C at a pressure of 2 kg/cm² was wound, and a roll curtain was obtained by aging it in an atmosphere at 50°C for 48 hours.

Although the present invention will be explained hereinafter in more detail by examples, the present invention is not limited thereto. Where, the values of the properties shown in the examples and comparative examples were determined by the following methods.

### Optical property:

Using a spectrophotometer (U-3400 type, produced by Hitachi Co., Ltd.), a transmission curve was taken in a region of a wave length of 0.3 to 1.2µm, and an ultraviolet ray screening rate in a region of a wave length of 0.3 to 0.4µm, a visual ray transmission in a region of a wave length of 0.4 to 0.8µm and an infrared ray screening rate in a region of a wave length of 0.8 to 1.2µm were calculated by area ratio.

### Haze value:

It was determined by using a haze meter (HGM-2K type, produced by Suga Test Machine Corporation)/a color computer (SM-4-2 type, produced by Suga Test Machine Corporation).

### Flame-proof property:

(1) After treated by a method defined in JIS A-1322 as the aforementioned method A, left flame, residue and area of carbonization were determined. A rank of flame-proof rank 2 or more was determined to be "○ ", and a rank less than the rank 2 was determined to be "×".
(2) By a method defined in JIS L-1091, left flame, residue, length of carbonization and area of carbonization were determined at a condition with no washing by A-1 method, section 3, a number of flame contact was determined by D method, section 2, and a case where both determined results were acceptable was indicated to be "○", an unacceptable case was indicated to be "×".

### Peel strength:

A value in a longitudinal direction was determined based on a method defined JIS K-6722.

### Frictional electrification voltage:

It was determined based on a method defined as JIS L-1094 method B in an atmosphere of 25°C and 40 %RH by bringing into contact with a film surface and a cloth to each other, and it was indicated by a unit of kV.

### Light resistant property:

Using a UV tester produced by Suga Test Machine Corporation, an ultraviolet ray was irradiated to a film surface for 12 hours at a black panel temperature of 63°C, and tensile strengths before and after the irradiation were determined based on JIS L-1096 6.12 method A (1990) to determine a strength holding rate.

### Tear strength:

A value in a longitudinal direction was determined based on JIS L-1096 6.15 m eth od 1 A-I.

### 100% modulus of adhesive:

The 100% modulus was determined based on a method defined in JIS K-6301. Weight of fiber fabric:
The weight was determined based on a method defined in JISL-1096 6.4.

### Examples 1-10, Comparative Examples 1-4:

Using the following materials, functional films and functional fiber fabrics were made, and both were laminated and the properties thereof were determined.

### (Films)

A: a transparent uniaxially stretched polyester film stretched in an extrusion direction at a draw ratio of 3.5 times and having an intrinsic viscosity of 0.66 and a thickness of 50µm
B: a transparent uniaxially stretched polyester film stretched in an extrusion direction at a draw ratio of 3.5 times after kneading therein an ultraviolet ray absorbent of 2,2'-dihydroxy-4-methoxybenzophenon, and having an intrinsic viscosity of 0.64 and a thickness of 50µm
C: a transparent biaxially stretched polyester film stretched in an extrusion direction at a draw ratio of 3.5 times and in a transverse direction at a draw ratio of 3.5 times, and having an intrinsic viscosity of 0.66 and a thickness of 50µm

### (Infrared ray screening paint coating)

The following paint was coated on one surface of a polyester film by a microgravure, changing the adhesion amount of solid component.
a: A solvent type paint, in which a blend weight ratio of an indium oxide doped with tin oxide (ITO) to a solvent-soluble type polyester resin was 1:1 and a solid component of which was 40%. A mean primary particle diameter of ITO was 0.05µm. After the paint was applied by a microgravure, it was dried at 120°C.
b: A paint prepared by adding polyethylene particles with a mean primary particle diameter of 0.2µm relative to the solid component of the above-described paint "a" was applied similarly to that in the paint "a".
c: A solvent type paint, in which a blend weight ratio of a tin oxide doped with antimony (ATO) to an ultraviolet ray curing type acrylic resin was 1:1 and a solid component of which was 40%. A mean primary particle diameter of ATO was 0.05µm. After the paint was applied by a microgravure, it was cured by irradiating an ultraviolet ray by an ultraviolet ray lamp.

### (Fiber fabrics)

(1) ARussell knit fabric prepared by using a polyester yarn with 165 decitex and setting a wale/course density at 36 yarns/32 yarns/2.54 cm (weight: 115 g/m²).
(2) A Russell knit fabric prepared by using a nylon 6 yarn with 165 decitex and setting a wale/course density at 36 yarns/32 yarns/2.54 cm (weight: 115 g/m²).

### (Flame-proof treatment of fiber fabric carried out simultaneously with dyeing)

(i): Without adding a flame-proof agent, an yellow fiber fabric was prepared by dyeing it at a bath ratio of 1 /20 and a temperature of 135°C for 60 minutes.
(ii) A fiber fabric was prepared by adding hexabromocyclododecane 50% aqueous solution (modified SDF-FR, produced by Daikyo Chemical Corporation) to a dyeing solution so that the concentration relative to the weight of the fiber fabric became 35%, and treating in a manner similar to that of the above-described (i).

### (Post flame-proof treatment of dyed fiber fabric)

A dyed fiber fabric was treated with a flame-proof agent at the following condition, it was dried at 130°C, and it was set in a pin tenter at a temperature of 160°C. Where, the wet pick up of the fiber fabric was 100%.
①: not treated.
②: A fiber fabric was dipped in an aqueous bath prepared with 25 wt% of a phosphorus-bromine compound aqueous solution (Fran T-142, produced by Daikyo Chemical Corporation, solid component: 45%) and 4 wt% of a cyclic phosphonic acid ester (K-19A, produced by Meisei Chemical Corporation, solid component: 99% or more), and it was squeezed by a mangle.
③ A fiber fabric was dipped in an aqueous bath prepared with 25 wt% of an ammonium bromide phosphate aqueous solution (Vigour B-1143, produced by Daikyo Chemical Corporation, solid component: 43%) and 4 wt% of a cyclic phosphonic acid ester (K-19A, produced by Meisei Chemical Corporation, solid component: 99% or more), and it was squeezed by a mangle.
④: A fiber fabric was dipped in an aqueous bath prepared with 30 wt% of an aqueous solution of an aromatic hydrogen bromide and a metal salt compound (Fran T-4, produced by Daikyo Chemical Corporation, solid component: 60%), 10 wt% of an urethane-group resin (U-30, produced by Daikyo Chemical Corporation, solid component: 30%), 1 wt% of crosslinking agent (Panaguard NX, produced by Daikyo Chemical Corporation, solid component: 25%) and 2 wt% of an anti-static agent (ASA, produced by Miyoshi Fat and Oil Corporation, solid component: 20%), and it was squeezed by a mangle.

### (Lamination of film and fiber fabric)

The following adhesive was applied to one surface of a fiber fabric by a gravure coater, it was pressed onto a film surface to which an infrared ray screening paint was not applied, and the laminate was aged at 50°C for 50 hours.
Composition of adhesive: An adhesive prepared from 100 parts of a polyester-group polyurethane (solid component: 50%, ethyl acetate solution, "Tieforce" 865HV, produced by Dainippon Inc and Chemicals, Inc.), 15 parts of a bifunctional isocyanate (solid component: 75%, ethyl acetate solution, "Barknock" DN950, produced by Dainippon Inc and Chemicals, Inc.) and 4 parts of a chain elongation agent (solid component: 75%, ethyl acetate solution, "Crysbon" accel T, produced by Dainippon Inc and Chemicals, Inc.).

The result is shown in Tables 1 and 2.

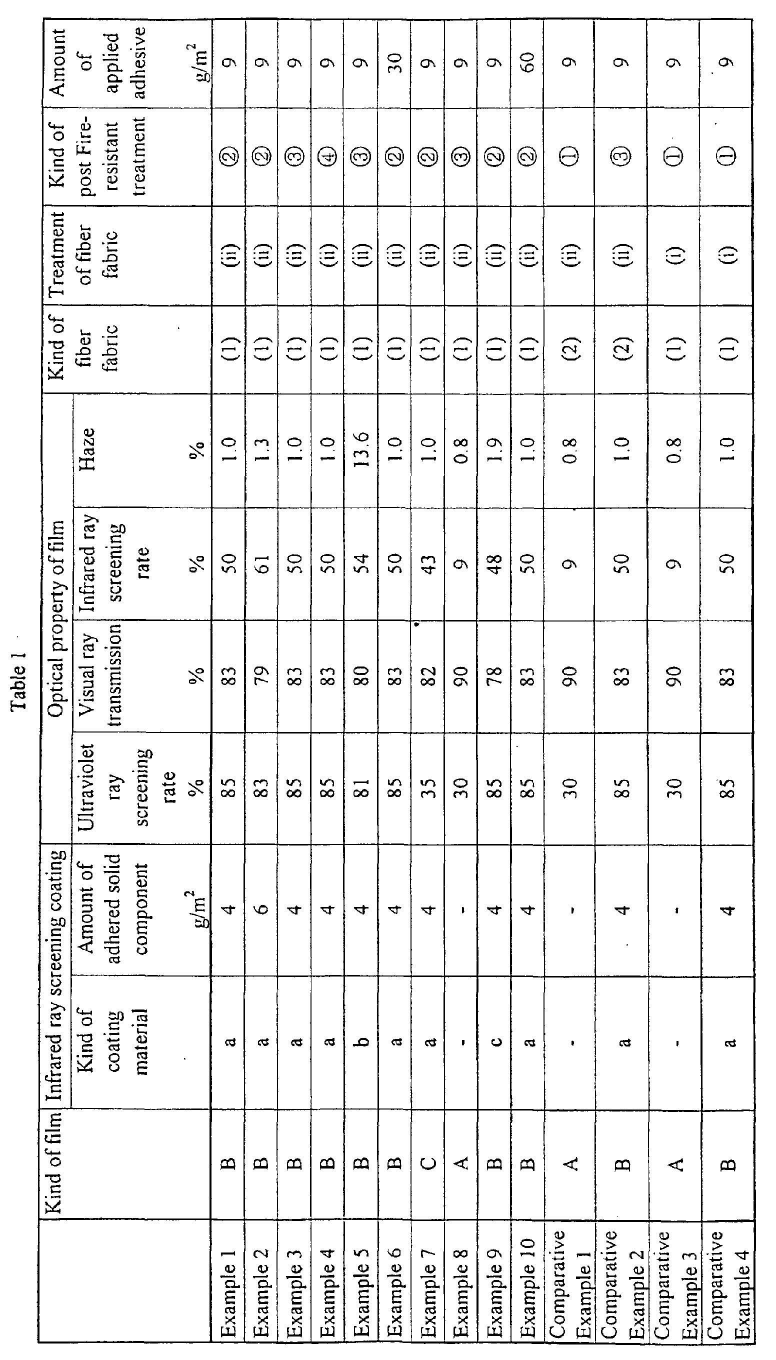

**Table 2**

| | Property of laminate sheet of film/fiber fabric | | | | | |
|---|---|---|---|---|---|---|
| | Fire-resistant property | | Frictional electrification voltage kV | Peel strength N/3cm | Light interrupting property % | Tear strength N |
| | JIS A 1322 | JIS L 1091 | | | | |
| Example 1 | ○ | ○ | 0.92 | 330 | 89 | 1.9 |
| Example 2 | ○ | ○ | 0.80 | 348 | 91 | 2.7 |
| Example 3 | ○ | ○ | 0.65 | 312 | 86 | 2.2 |
| Example 4 | ○ | ○ | 1.16 | 369 | 88 | 2.5 |
| Example 5 | ○ | ○ | 0.55 | 335 | 94 | 1.8 |
| Example 6 | ○ | ○ | 0.55 | 510 | 94 | 2.7 |
| Example 7 | ○ | ○ | 0.55 | 344 | 90 | 2.8 |
| Example 8 | ○ | ○ | 0.87 | 370 | 25 | 2.0 |
| Example 9 | × | ○ | 1.42 | 410 | 85 | 2.8 |
| Example 10 | ○ | × | 1.25 | 1022 | 94 | 3.0 |
| Comparative Example 1 | × | × | 4.01 | 370 | 20 | 2.4 |
| Comparative Example 2 | × | × | 0.43 | 324 | 80 | 2.2 |
| Comparative Example 3 | × | × | 4.58 | 318 | 22 | 2.2 |
| Comparative Example 4 | × | × | 5.13 | 325 | 85 | 2.6 |

From Tables 1 and 2, it is understood that the sheets according to the present invention were excellent in flame-proof property, and satisfied with optical properties of ultraviolet ray screening and infrared ray screening, a anti-static property and a function of a high durability.

### Industrial Applications of the Invention

The sheet according to the present invention can be utilized in broad fields, the sheet is used for a curtain, a spatial partition membrane, a hood, a cover for storing luggage, an eaves-projecting type tent, a bag, a water-proof cloth, a tent, an agricultural house, a heat/cold reserving cover or a partition, and in particular, it can be preferably used as a curtain and a roll blind for a general home and other uses of a shop such as a convenience store, a museum, an office, etc.

## Claims

1. A sheet **characterized in that** said sheet comprises a film comprising a thermoplastic resin and a fiber fabric containing a flame-proof compound which is laminated on at least one surface of said film, and said fiber fabric comprises the same kind of a thermoplastic resin as that of said film.

2. The sheet according to claim 1, wherein said film comprises an ultraviolet ray screening film and/or an infrared ray screening film.

3. The sheet according to claim 1, wherein said fiber fabric contains an anti-static compound.

4. The sheet according to claim 1, wherein an weight of said fiber fabric is in a range of 20 to 200 g/m².

5. The sheet according to claim 1, wherein said film and said fiber fabric are bonded to each other via an adhesive.

6. The sheet according to claim 5, wherein said adhesive is applied on said fiber fabric.

7. The sheet according to claim 5, wherein an weight of said adhesive is in a range of 5 to 50 g/m².

8. The sheet according to claim 5, wherein said adhesive is a polyurethane-group adhesive.

9. The sheet according to claim 5, wherein an 100% modulus determined based on JIS K-6301 of said adhesive is in a range of 1 0 to 200 g/cm².

10. The sheet according to claim 1, wherein said film has an ultraviolet ray screening rate in a region of a wave length less than 0.4µm in a range of 30% or more, a visual ray transmission in a region of a wave length of 0.4µm or more and 0.8µm or less in a range of 70% or more, and an infrared ray screening rate in a region of a wave length of 0.8µm or more and 1.2µm or less in a range of 20% or more.

11. The sheet according to claim 1, wherein said film is mat finished.

12. The sheet according to claim 1, wherein a haze of said film is 5% or more.

13. The sheet according to claim 1, wherein said thermoplastic resin comprises at least one selected from the group consisting of a polyester-group resin, a polyolefine-group resin, a polyamide-group resin and a polyacrylic-group resin.

14. The sheet according to claim 1, wherein a frictional electrification voltage of said sheet determined based on a method defined as JIS L-1094 method B in an atmosphere of 25°C and 40 %RH is 2 kV or less.

15. The sheet according to claim 1, wherein a peel strength between said film and said fiber fabric determined based on a method defined in JIS K-6722 is 2 N/3cm or more.

16. The sheet according to claim 1, wherein a flame-proof property of said sheet defined in JIS A-1322 is flame-proof rank 2 or more.

17. The sheet according to claim 1, wherein said sheet satisfies a flame-proof standard defined in JIS L-1091.

18. The sheet according to claim 1, wherein a tear strength of said sheet determined based on a method defined as JIS L-1096 6. 15. method I A-I is 10N or more.

19. The sheet according to claim 1, wherein said fiber fabric is colored.

20. The sheet according to claim 1, wherein 70% or more of said sheet is formed by an organic polymer having an identical composition.

21. The sheet according to claim 1, wherein said sheet is used for a curtain, a spatial partition membrane, a hood, a cover for storing luggage, an eaves-projecting type tent, a bag, a water-proof cloth, a tent, an agricultural house, a heat/cold reserving cover or a partition.

22. A curtain using a sheet according to claim 21.

23. The curtain according to claim 22, wherein said curtain has a thickness of 1 mm or less.

24. A roll curtain using a curtain according to claim 22.
